# EUROPEAN PATENT SPECIFICATION

(11) **EP 3 119 180 B1**
(45) Date of publication and mention of the grant of the patent: **31.01.2018**
(21) Application number: 15716896.4
(22) Date of filing: 18.03.2015
(51) Int. Cl.: A01C 7/08

(54) **DEVICE AND METHOD FOR DISTRIBUTION OF GRANULAR MATERIAL IN AN AGRICULTURAL IMPLEMENT**
VORRICHTUNG UND VERFAHREN ZUR VERTEILUNG VON KÖRNIGEN MATERIALS IN EINER LANDWIRTSCHAFTLICHEN VORRICHTUNG
DISPOSITIF ET MÉTHODE DE DISTRIBUTION DE MATÉRIAU GRANULAIRE DANS UN ÉQUIPEMENT AGRICOLE

(30) Priority: 20.03.2014 SE 1450329
(43) Date of publication of application: 25.01.2017
(73) Proprietor: Väderstad Holding AB, 590 21 Väderstad (SE)
(72) Inventor: KNIOLA, Robert, 582 47 Linköping (SE); WISTRAND, Ulf, 640 24 Sköldinge (SE)
(74) Representative: Awapatent AB
(86) International application number: PCT/SE2015/050314
(87) International publication number: WO 2015/142272

(56) References cited:
- EP-A1- 2 039 233
- EP-A1- 2 210 465
- DE-A1- 2 436 355

## Description

### Technical field

The present document relates to a device and a method for distribution of granular material in an agricultural implement, such as seed, fertilizer or biocide.

### Background

In agricultural implements in which granular material is to be distributed over a field, there is often a need to divide a material flow into a plurality of outbound material flows.

In such a distribution of granular material from an inbound material flow to two or more outbound material flows, it is desirable to achieve a predetermined distribution between the outbound material flows. Such a predetermined distribution can mean, for example, that in a distribution from an inbound material flow to two outbound material flows it is wished to achieve 50 % of the inbound material to each outbound material flow, i.e. as even a distribution as possible.

There are many different types of distribution devices on the market, as for instance the ones disclosed in EP 2 039 233 A1 and EP 2 210 465 A1, but many of them do not give as even a distribution as would be desirable.

Besides the challenge of achieving an even distribution, there is a challenge to reduce energy losses in the distribution device.

There is therefore a need for a distribution device which is easy to produce, reliable and gives an even distribution of material to the outbound material flows.

### Summary

One object of the present document is therefore to provide an improved distribution device, and especially one which wholly or partially meets the requirements specified in the introduction.

The invention is defined by the attached independent patent claims. Embodiments emerge from the dependent patent claims, the following description and the drawings.

According to a first aspect, an agricultural implement comprising a distributor unit for distribution of granular material is provided. The distributor unit comprises an inlet, a plurality of outlet channels, which are situated below the inlet and which connect to transport channels) for pneumatic onward transport of the granular material, and a distributor region, which is situated between the inlet and the outlets and which, viewed in a plane substantially perpendicular to a principal direction of material flow in the distributor region, forms distributor openings leading to respective outlets. The distributor region, viewed in said plane, has a length and a width, in which the length is greater than the width. The distributor openings are arranged in a row along one of said length and width and, viewed along said row of distributor openings, at least two, preferably all, pairs of adjacent distributor openings connect to outlet channels which lead to different transport channels. At least two distributor openings connect to outlet channels which lead to the same transport channel, and the cross-sectional area of the inlet section connectable to the feed device and the cross-sectional area of the distributor region are equally large +/-10%, +/-5% or +/-1%. One advantage is that an incredibly exact precision can in theory be obtained. By having two distributor openings or more, the precision can in principle be increased ad infinitum, i.e. the greater the number of distributor openings, the better the precision.

As a result, a device which gives very good distribution is provided. In trials with sorting of granular material, distribution variances in distribution in the order of magnitude of 1-2 % are measured, which must be compared with 10-20 %with conventional technology.

By providing a plurality of outlet channels for each transport channel, the risk that an, in the inlet, uneven distribution over the flow area will result in an uneven distribution between the transport channels is reduced.

The distributor unit can have a number n of transport channels and a number x*n of distributor openings, where n is an integer, and wherein every nth. distributor opening leads to the same transport channel.

For example, the number of outlets can be an even number, such as 4-20, preferably 4-16 or 4-8.

The distributor unit can have an even number of outlet channels and a number of transport channels, and wherein equally many outlet channels connect to each one of the transport channels. The number of outlet channels can be even or odd. Also the number of transport channels can be even or odd.

A cross-sectional shape of the inlet, viewed in a plane transversely to the direction of flow, can differ from a cross-sectional shape of the distributor region.

A geometric center of gravity of a cross-sectional area, perpendicular to a principal direction of material flow, for the inlet can be non-aligned with a geometric center of gravity for a cross-sectional area, perpendicular to the principal direction of material flow, for the distributor region, viewed parallelly with the principal direction of flow from the inlet to the distributor region.

The distributor unit can further comprise a member for spreading of the granular material over at least the length of the distributor region.

The advantage with such a spreader member is to obtain as wide a spread as possible viewed over the length of the distributor region, in order that the stream of granular material shall hit as many compartments as possible. Without the spreader, the risk of a large part of the material stream ending up in the middle of the distributor region increases.

The spreader member can also achieve spreading over the width of the distributor region, which can reduce the risk of clogging of some distributor opening.

Said spreading member can comprise a wall extending between the inlet and the distributor region.

The wall can comprise an inwardly convex section.

The inwardly convex section can be convex viewed in a plane containing the principal direction of flow for the granular material in the inlet. Alternatively or additionally, the inwardly convex section can be inwardly convex in a plane which is perpendicular to the principal direction of flow in the inlet. The inwardly convex section can thus be single-curved and/or double-curved.

The inwardly convex section can be situated substantially centered on the wall, so that at least 20 %, preferably at least 30 %, at least 40 % or at least 50 % of granular material coming into the inlet hits the inwardly convex section.

At least one air stream generating unit can be connected to said transport channels, preferably upstream of the distributor unit, so that granular material fed to the transport channels is pneumatically transported onward.

The distributor unit can be configured such that the granular material is fed to the inlet principally with the aid of gravity.

One advantage of utilizing gravity for the feed into the distributor and then transporting the granular material to outlets (for examples in the form of seed coulters, fertilizer coulters or the like) or a following singulating device, is that the energy consumption falls in the system as a whole. As a rule, the granular material in an air stream would be accelerated so as then to be distributed in, for example, a distributor head or a Y-distributor, in which case the distribution would consume a great deal of energy.

In the concept described herein, the distribution is realized by a free resource in the form of gravity and the distribution energy then becomes negligible in comparison with the acceleration energy.

According to a second aspect, a method for distribution of granular material in an agricultural implement according to claim 12 is provided. The method comprises leading the material through an inlet section to a distributor section comprising a plurality of distributor openings and from the distributor section via outlet channels to at least two transport channels. The distributor section, viewed in a plane perpendicular to a principal direction of material flow at the distributor section, can have a length and a width, in which the length is greater than the width, and the distributor openings can be arranged in a row along one of said length and width. The method further comprises leading the material from the distributor section, through an outlet channel associated with a respective opening, to one of the transport channels, leading part-quantities of the material, which are led through at least two, preferably all, pairs of adjacent distributor openings to different transport channels, and gathering material from at least two of said outlet channels in a respective transport channel.

### Brief description of the drawings

Figs 1a-1b show a system for feeding of granular material.
Figs 2a-2d show a distributor comprising an inlet part and a distributor part.
Figs 3a-3c show the inlet part shown in figs 2a-2d in closer detail.
Figs 4a-4b show the distributor part shown in figs 2a-2d in closer detail.
Fig 5 shows a part of an alternative system for feeding of granular material.
Figs 6a-6c show the distributor unit shown in fig 5 in closer detail.
Figs 7a-7c show the inlet part shown in fig 5 in closer detail.
Figs 8a-8b show the distributor part shown in fig 5 in closer detail.

### Detailed description

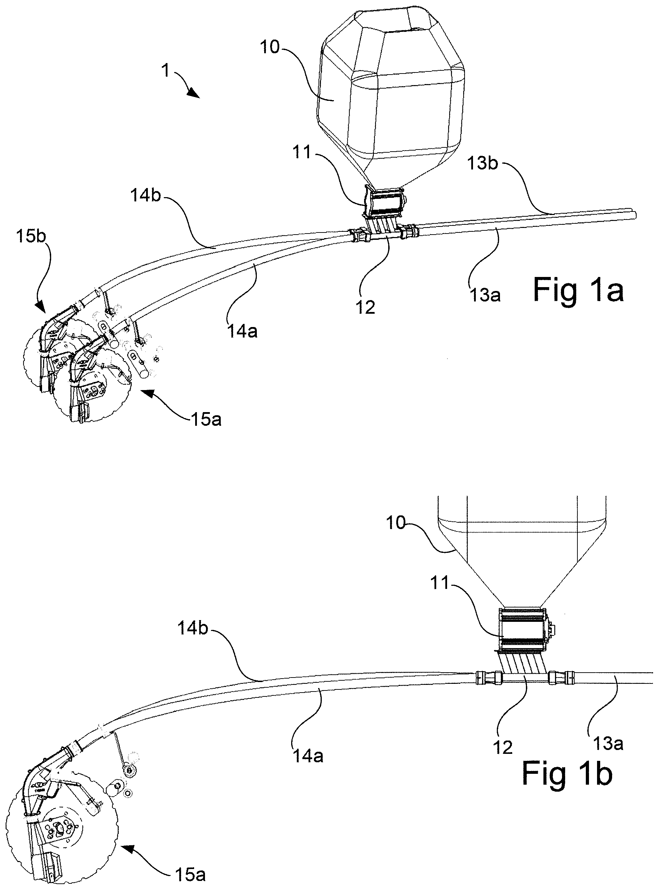

Figs 1a and 1b show a system 1 for feeding of granular material. The system 1 comprises a container 10, a feed device 11, a distributor unit 12, a pair of transport channels 13a, 14a; 13b, 14b, and a pair of seed coulters 15a, 15b, connected to a respective transport channel. The seed coulters 15a, 15b are here provided with sowing disks. It will be appreciated that other types of seed coulters, fertilizer coulters or other feed-out devices can be utilized.

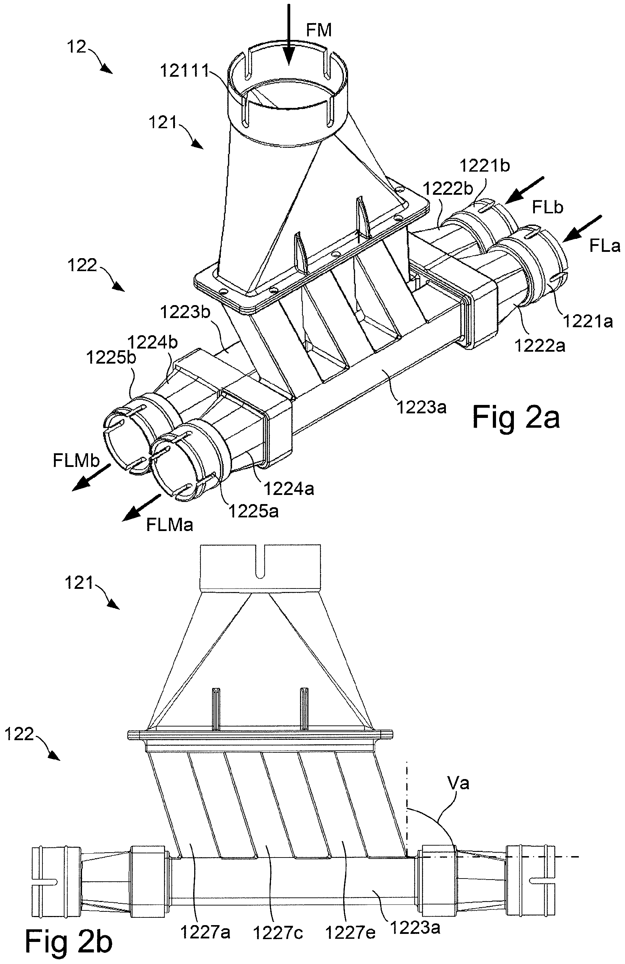

The description will focus below on the distributor unit 12, which is shown in closer detail in figs 2a-2d.

The distributor unit 12 comprises an inlet part 121 and a distributor part 122.

The inlet part 121 comprises an inlet section 1211, which is connectable to the feed device 11, a transition section 1212, and a distributor connection section 1213.

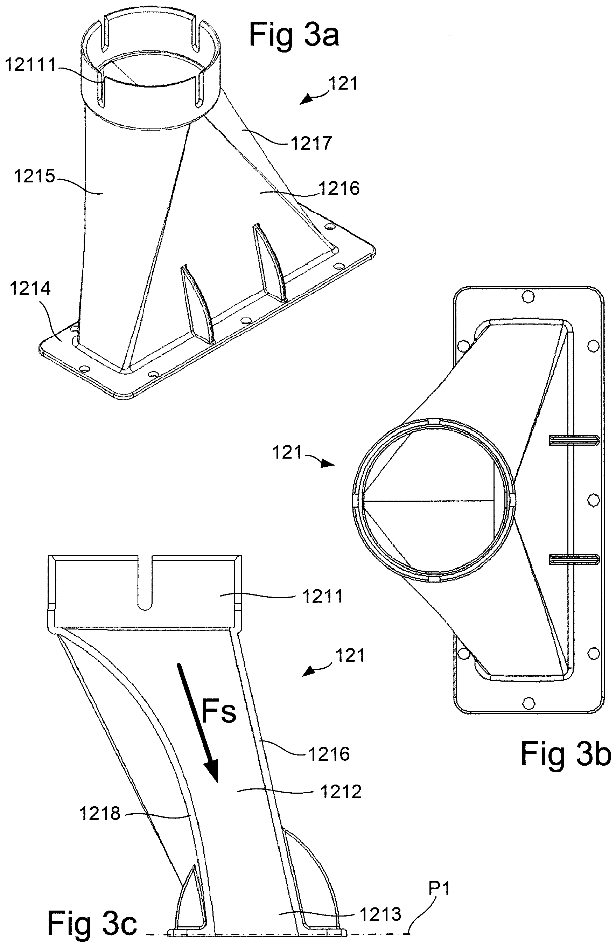

The inlet part is shown in closer detail in figs 3a-3c.

The inlet section 1211 has an inlet opening, which can be tailored in shape and size to an outlet (not shown) from the feed device 11. The inlet section 1211 can have one or more slots 12111 or the like, running along a direction of connection to the feed device, in order to allow a certain change in shape of the inlet section 1211 so as to ensure secure connection to the outlet of the feed device 11.

The inlet section 1211 and the distributor connection section 1213 can be of different shape viewed in a plane P1 (fig 3c) transversely to (preferably 70º-90º or 80º-90º) a direction of flow Fs. In the shown example, the inlet opening 1211 is substantially circular, while the distributor connection section 1213 is substantially rectangular.

The transition section 1212 can have walls 1215, 1216, 1217, 1218 which connect to the inlet section 1211 and the distributor connection section 1213, so that a transition between the shape of the inlet opening and the shape of the distributor connection section is achieved.

The inlet section 1211 and the distributor connection section 1213 can have substantially the same cross-sectional area, viewed in a plane perpendicular to the principal direction of flow Fs. Preferably, the transition section 1212 can also have a substantially constant cross-sectional area. One or more of the walls 1218 which constitute the transition section can be inwardly convex. In the shown embodiment, the convex wall 1218 is convex viewed in a plane containing the principal direction of flow Fs through the inlet part 121. The convex wall 1218 can also be convex viewed in a plane transversely to the principal direction of flow Fs. In the shown embodiment, one of the walls 1218 is inwardly convex, while the other walls are substantially straight viewed in a respective plane containing the principal direction of flow Fs. Preferably, the convex wall 1218 has a double-curved convexity.

The distributor connection section 1213 can be tailored for connection to the distributor part 122. For example, the distributor connection section 1213 can have a circumferential flange 1214, which can have a plurality of holes for screws, rivets or bolts, as are shown in the drawings. Alternatively, a plurality of fastening lugs (not shown) are provided. As a further alternative, one or more snap joints, press fit joints or the like can be provided.

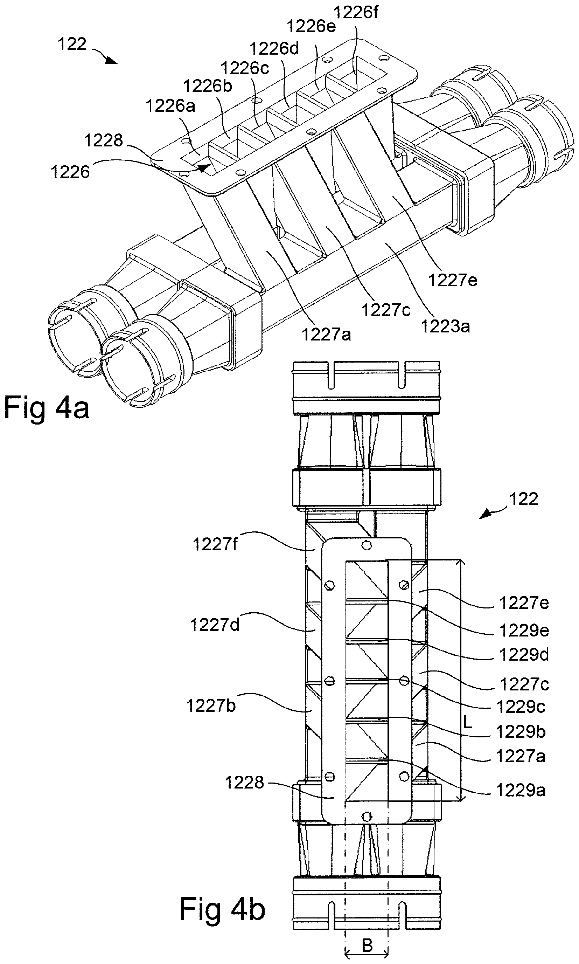

With reference to figs 4a and 4b, the distributor part 122 is shown without the inlet part 121.

The distributor part 122 comprises a distributor region 1226, which has a plurality of distributor openings 1226a, 1226b, 1226c, 1226d, 1226e, 1226f, wherein a plurality of distributor channels 1227a, 1227b, 1227c, 1227d, 1227e, 1227f lead from a respective distributor opening to collecting sections 1223a, 1223b and a pair of transport channel connecting sections 1221a, 1225a; 1221b, 1225b.

The size of each of the distributor openings 1226a, 1226b, 1226c, 1226d, 1226e, 1226f can be made proportional to the quantity of granular material which shall be received in a respective distributor opening. In the embodiments shown herein, all the distributor openings have the same size. It is conceivable to modify the size of the openings, for example on the basis of empirical tests or simulations relating to the distribution accuracy for a specific granular material, in order to achieve a desired, for example more even, distribution.

In the shown example, the distributor region 1226 is rectangular. The distributor region 1226 has a length L and a width B, perpendicular to the length.

The distributor region can be configured, for example, as a parallelepiped, in which the partition walls can have an angle different from 90º to the long sides.

The distributor openings 1226a, 1226b, 1226c, 1226d, 1226e, 1226f can be demarcated from one another by partition walls 1229a, 1229b, 1229c, 1229d, 1229e.

It will be appreciated that the partition walls can be tapered in the direction opposite to the material flow.

In the shown example, the distributor region 1226 has six openings 1226a, 1226b, 1226c, 1226d, 1226e, 1226f. Distributor channels 1227a, 1227c, 1227e associated with three of the openings 1226a, 1226c, 1226e lead to a first collecting section 1223a and distributor channels 1227b, 1227d, 1227f associated with three others of the openings 1226b, 1226d, 1226f lead to a second transport channel 1223b.

In the shown example, the distributor openings 1226a, 1226b, 1226c, 1226d, 1226e, 1226f lie in a row along the longitudinal direction L of the distributor region.

In the shown example, every first alternate distributor channel leads to the first 1223a transport channel and every second alternate distributor channel to the second transport channel 1223b.

It will be appreciated that, in order to achieve an even distribution between n transport channels 13a, 13b, 14a, 14b, the distributor part 122 can be provided with a number x of distributor channels, which number x of distributor channels is evenly divisible by the number of transport channels n.

It will also be appreciated that the number of distributor channels can be greater or less than what is shown. For example, where two transport channels are present, the number of distributor channel can be four, six, eight, ten or twelve.

The distributor channels 1227a, 1227c, 1227e; 1227b, 1227d, 1227f leading to one of the respective transport channels 13a, 14a; 13b, 14b connect to a collector section 1223a; 1223b. The collector section can be formed by a channel which constitutes a part of a transport channel.

In the example shown in figs 1a-4b, the distributor channels connect to the collector section at or in positions situated at a distance apart in a direction of flow of the transport channel.

With reference to fig 2a, the distributor part 122 has a collector section 1223, 1223b, which is connectable in order to constitute part of a respective transport channel 13a, 14a; 13b, 14b. The connection to an upstream transport channel 13a, 13b is achieved at an inlet section 1221a, 1221b of the distributor part 122, which inlet section, via an inlet transition section 1222a, 1222b, leads to a respective collecting section 1223a, 1223b. The inlet transition section 1222a, 1222b achieves a transition between the cross-sectional shape of the upstream transport channel 13a, 13b and the cross-sectional shape of the collector section 1223a, 1223b.

From the collecting section 1223a, 1223b, a respective outlet transition section 1224a, 1224b leads to a respective outlet section 1225a, 1225b, to which a respective downstream transport channel 14a, 14b is connected. The outlet transition section 1224a, 1224b achieves a transition between the cross-sectional shape of the downstream transport channel 14a, 14b and the cross-sectional shape of the collector section 1223a, 1223b.

At a respective inlet section 1221a, 1221b, an incoming air stream FLa, FLb is received. The incoming air stream can be a pure air stream from, for example, a pump or a fan, or an air stream into which material has already earlier been mixed.

At a respective outlet 1225a, 1225b, a respective material-mixed air stream FLMa, FLMb is dispensed.

The distance between two adjacent connections for distributor channels 1227a, 1227b, 1227c, 1227d, 1227e, 1227f to the collecting section 1223a, 1223b can be approximately as large as the extent of the distributor channel parallelly with the direction of flow in the collecting section 1223a, 1223b.

The transport channels 13a, 13b, 14a, 14b can principally be formed by a tube or a pipe.

In the shown example, the collector section 1223a, 1223b and the transport channel 13a, 13b, 14a, 14b have a different cross-sectional shape: the collector section 1223a, 1223b has a polygonal, especially square, cross-sectional shape, while the transport channel 13a, 13b, 14a, 14b has a circular cross-sectional shape.

The container 10 can be formed by an open container, i.e. a container whose interior is in contact with, and has the same pressure as, the environment. The feed to the inlet can thus be realized principally with the aid of gravity.

The feeder 12 can be a feeder of conventional type, for example comprising a measuring wheel (not shown), which advances a predetermined volume per revolution.

According to one embodiment, the feed FM to the inlet can be realized with the aid of a feeder 12 which provides an airlock, for example by virtue of the fact that the radially outer sections of the buckets of the feed wheel bear against an inner wall of the feeder housing (not shown) and are optionally made of rubber or rubbery material.

According to another embodiment, the feed to the inlet can be realized with the aid of a pressure difference, for example an overpressure in the container 10 and/or an underpressure in the transport channel.

The transport channels 13a, 13b, 14a, 14b can be configured for pneumatic feeding of the material which is supplied via the distributor. For this purpose, the transport channels can be connected to a pump or fan which generates an airflow in order to drive the material to a respective seed coulter 15a, 15b.

Alternatively, the transport channels can be configured for gravity-based feeding of the material.

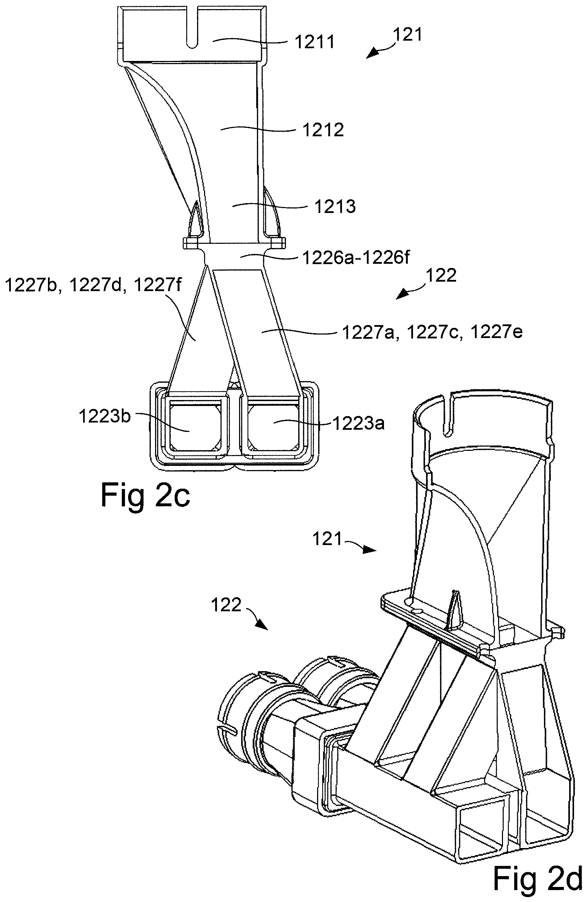

An agricultural implement can be provided with one or more feed devices 1 as shown in figs 1 and 2. For example, the agricultural implement can be provided with such a feed device per pair of seed coulters.

Alternatively, each feed device can comprise three, four or five transport channels, which each connect to a respective seed coulter.

It will be appreciated that the cross-sectional shape of the inlet does not need to be circular as shown in the drawings, but can be polygonal (for example square or rectangular), or curved, such as elliptical or the like.

In the shown embodiment, the distributor part and the inlet part are configured as separate parts, which are joined together with an axial joint. Alternatively, the distributor part and the inlet part can be configured as a single integral part, consisting of a pair of permanently joined together parts, or consisting of a part configured in one piece.

Furthermore, the distributor part can be configured in one piece or as a plurality of parts which have been joined together.

In an alternative embodiment, the transport channels can lead to respective further distributors. For example, a plurality of distributors which each utilize the principle shown herein can be coupled together in series. Alternatively, each transport channel can lead to a respective distributor head, which has the capacity to distribute an air-mixed material flow to more than two, preferably more than 4, more than 6, more than 8, more than 10 or more than 12 air-mixed material flows.

With reference to fig 2b, the outlet channels 1227a, 1227b, 1227c, 1227d, 1227e, 1227f can connect to the collecting section 1223a, 1223b at same or different angles Va.

The angle Va can be 90º. Alternatively, the angle Va can be greater or less than 90º. Preferably, however, the angle Va is less than 90º, which means that the change of direction of the granular material upon entry into the collecting section 1223a, 1223b is less than 90º. According to preferred embodiments, the angle Va can be less than 90º, preferably 45º-90º or 70º-90º.

In tests in a laboratory environment, the variant having two horizontal transport channels, which is shown with reference to figs 1a-4c, has been shown to have a precision of 1.25 % between the distributor openings, i.e. with an outcome of 10.0 kg in one sack and 10.250 kg in the other. Similar values, with the same error distribution, have arisen in many test runs.

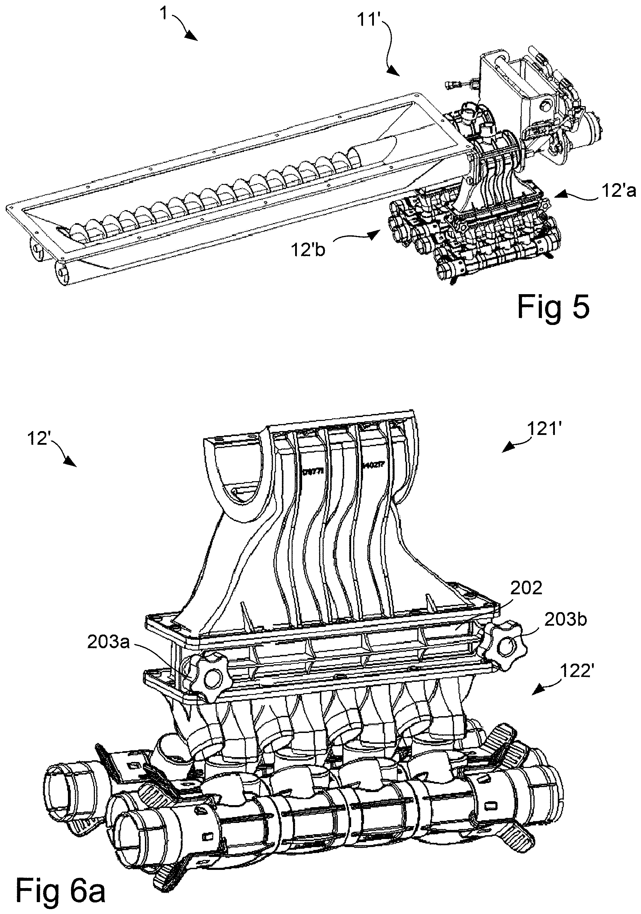

With reference to fig 5, an alternative embodiment of a feeder device 11', to which a pair of distributor units 12'a and 12'b are connected, is shown. The feeder device 11' here comprises a pair of worm conveyors, which operate in a lower part of a container (not shown). Material present in the container thus falls with the aid of gravity toward the worm conveyors, which draw the material axially toward a respective distributor unit 12'a, 12'b.

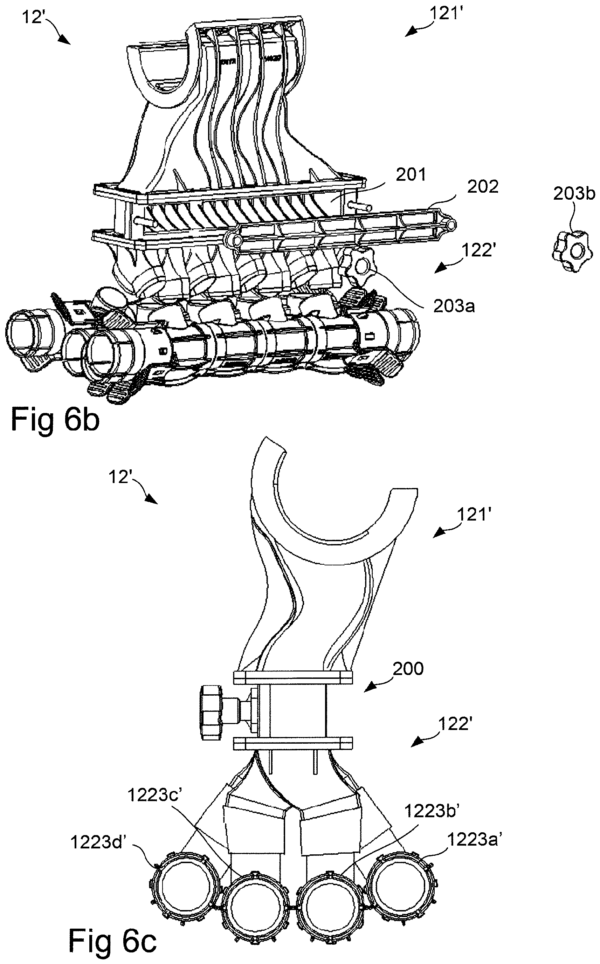

In figs 6a-6c is shown a distributor unit 12', comprising an inlet part 121' and a distributor part 122', and an intervening cleaning part 200.

The distributor part 122' is configured for distribution of a material flow, entering via the inlet part 121', to four collecting sections 1223a', 1223b', 1223c', 1223d', each of which is connectable to respective upstream and downstream transport channels (not shown) in the same way as shown with reference to figs 1a-1b.

In fig 6b, the cleaning part cleaning opening 201 is shown in open state, so that entry to the distributor region 1226' is achieved. For this purpose, a cleaning hatch 202 has been removed. The cleaning hatch 202 can be held in place with the aid of one or more fastening elements, which are here shown in the form of screws 203a, 203b provided with a grip wheel.

The distributor region 1226' has a length L' and a width B', in which the length L can be greater than the width B.

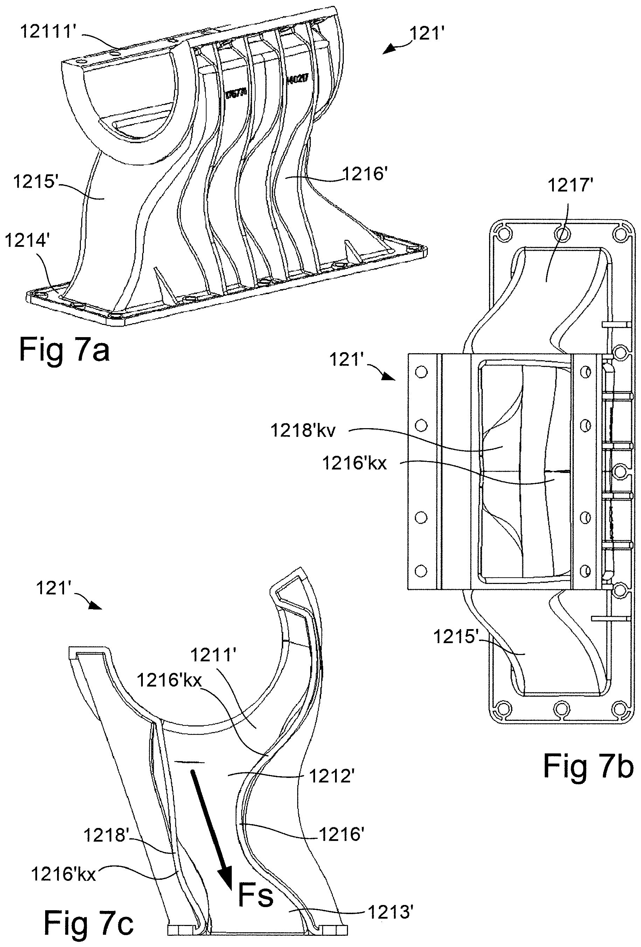

In figs 7a-7c, the inlet part 121' is shown in detail. As can be seen from figs 7a-7c, the inlet part 121' has four main wall sections 1215', 1216', 1217', 1218', which each extend from an inlet section 1211' via a transition section 1212' to an outlet section 1213'.

Two of the wall sections form short side wall sections 1215', 1217', which connect to the short sides of the distributor region 1226'. Two of the wall sections form long side wall sections 1216', 1218', which connect to the long sides of the distribution opening.

At least one of the wall sections can have an inwardly convex section. The inwardly convex section can be inwardly convex viewed in a plane containing the principal direction of flow Fs through the inlet part 121'.

Alternatively or additionally, the inwardly convex section can be convex viewed also in a plane which is perpendicular to the principal direction of flow Fs.

At least one of the walls can thus have a wall section which has a single-curved convexity or which has a double-curved convexity.

In the embodiment shown in figs 7a-7c, one of the long side walls, more specifically the long side wall 1216' toward which a material flow FM coming into the inlet part 121' is directed, has an inwardly convex wall section 1216'kx of double-curved convexity.

The opposite long side wall 1218' can have an inwardly convex wall section of double-curved convexity. Alternatively or additionally, this long side wall can also have an inwardly concave wall section 1218'kv of double-curved concavity.

In the embodiment shown in figs 7a-7c, the short side walls 1215', 1217' are substantially flat.

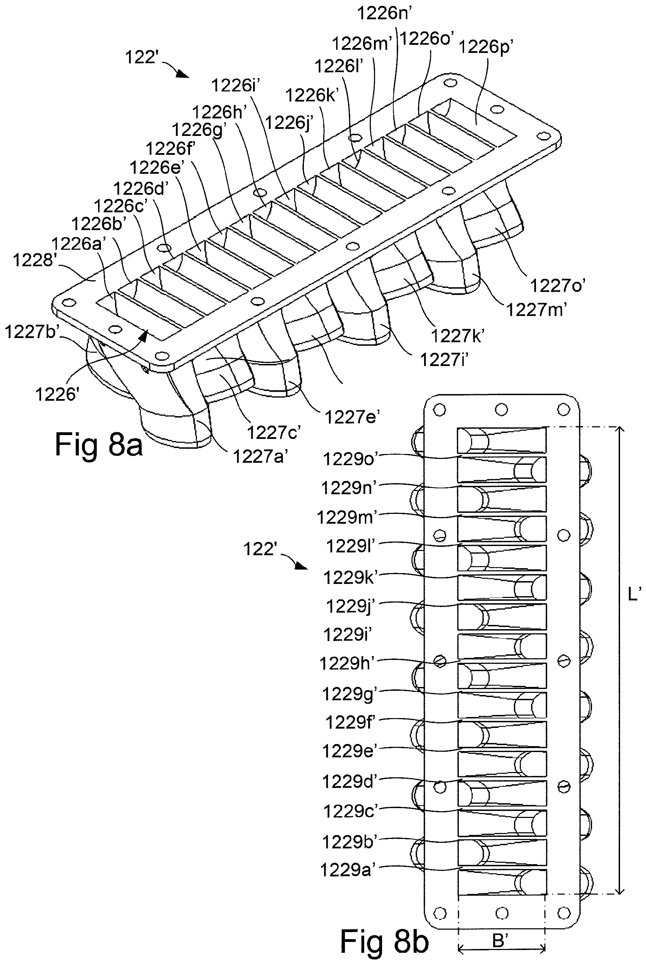

In figs 8a-8b, the distributor part 122' is shown with the inlet part 121' removed. The distributor region 1226' here comprises 16 distributor openings 1226a'-1226p', which each lead to a respective distributor channel 1227a'-1227o' (of which only some are visible in figs 8a and 8b). The distributor openings are placed in a row along the longitudinal direction L of the distributor region 1226'. The distributor openings can have a length which, excluding the thickness of the partition walls 1229a'-1229o', corresponds to 1/n of the length of the distributor region L', where n is the number of distributor openings, and a width which corresponds to the width B' of the distributor region.

The embodiment shown with reference to figs 5-7b has also been trialed in a laboratory environment. Here, however, the precision has been around 10-20 %, depending on conditions. Existing solutions with the distributor heads often have an error distribution of 20 %. The new concept, however, gave significantly lower energy consumption with maintained, or even somewhat improved precision.

It will be appreciated that two or more distributor units 12, 12', as is shown herein, can be placed one after the other in series. Alternatively, a distributor unit can be followed by a distributor head, a singulating device or the like.

## Claims

1. An agricultural implement comprising a distributor unit for distribution of granular material, which distributor unit comprises:
an inlet (121) connectable to a feed device (11), a plurality of outlet channels, which are situated below the inlet and which connect to transport channels (13a, 13b, 14a, 14b; 13a', 13b', 13c', 13d') for pneumatic onward transport of the granular material,
a distributor region (1226, 1226'), which is situated between the inlet and the outlets and which, viewed in a plane substantially perpendicular to a principal direction of material flow in the distributor region, forms distributor openings (1226a, 1226b, 1226c, 1226d, 1226e, 1226f; 1226a', 1226b', 1226c', 1226d', 1226e', 1226f'; 1226g', 1226h', 1226i', 1226j', 1226k', 1226l', 1226m', 1226n', 1226o', 1226p') leading to respective outlets,
the distributor region, viewed in said plane, having a length (L, L') and a width (B, B'), in which the length is greater than the width,
the distributor openings being arranged in a row along one of said length and width and,
viewed along said row of distributor openings, at least two, preferably all, pairs of adjacent distributor openings connecting to outlet channels which lead to different transport channels, wherein at least two distributor openings connect to outlet channels which lead to the same transport channel, **characterized in that** a cross-sectional area of the inlet section (1211) which is connectable to the feed device (11) and the cross-sectional area of the distributor region are equally large +/- 10 %, +/- 5 % or +/-1%.

2. The agricultural implement according to claim 1, wherein the distributor unit has a number n of transport channels and a number x*n of distributor openings, where n is an integer, and wherein every nth. distributor opening leads to the same transport channel.

3. The agricultural implement according to claim 1 or 2, wherein the distributor unit (1, 1') has a number of outlet channels and a number of transport channels, and wherein equally many outlet channels connect to each of the transport channels.

4. The agricultural implement according to any one of the preceding claims, wherein a cross-sectional shape of the inlet, viewed in a plane transversely to the direction of flow, differs from a cross-sectional shape of the distributor region.

5. The agricultural implement according to any one of the preceding claims, wherein a surface normal at a geometric center of gravity of a cross-sectional area, perpendicular to the principal direction of material flow, for the inlet, and a surface normal at a geometric center of gravity for a cross-sectional area, perpendicular to the principal direction of material flow, for the distributor region are non-aligned viewed parallelly with the principal direction of material flow from the inlet to the distributor region.

6. The agricultural implement according to any one of the preceding claims, further comprising a member for spreading of the granular material over at least the length of the distributor region.

7. The agricultural implement according to claim 6, wherein said spreading member comprises a convex wall extending between the inlet and the distributor region.

8. The agricultural implement according to claim 7, wherein said wall comprises an inwardly convex section viewed in a plane containing the principal direction of material flow and/or viewed in a plane perpendicular to the principal direction of material flow.

9. The agricultural implement according to claim 8, wherein the inwardly convex section is situated substantially centered on the wall.

10. The agricultural implement according to any one of the preceding claims, wherein at least one air stream generating unit is connected to said transport channels, preferably upstream of the distributor unit, so that granular material fed to the transport channels is pneumatically transported onward.

11. The agricultural implement according to any one of the preceding claims, wherein the distributor unit is configured such that the granular material is fed to the inlet principally with the aid of gravity.

12. A method for distribution of granular material in an agricultural implement, comprising:
leading the material through an inlet to a distributor region comprising a plurality of distributor openings and from the distributor region via outlet channels to at least two transport channels,
the distributorregion, viewed in a plane perpendicular to a principal direction of material flow at the distributor region, having a length and a width, in which the length is greater than the width, and the distributor openings being arranged in a row along one of said length and width,
leading the material from the distributor region, through an outlet channel associated with a respective opening, to one of the transport channels,
leading part-quantities of the material, which are led through at least two, preferably all, pairs of adjacent distributor openings to different transport channels, wherein the gathering of material from at least two of said outlet channels in a respective transport channel, and **characterized in that** a cross-sectional area of the inlet section which is connectable to a feed device and the cross-sectional area of the distributor region are equally large +/- 10 %, +/- 5 % or +/- 1 %.

## Patentansprüche

1. Landwirtschaftliches Gerät, das eine Verteilereinheit zur Verteilung von körnigem Material umfasst, wobei die Verteilereinheit Folgendes umfasst:
einen Einlass (121), der mit einer Speisevorrichtung (11) verbunden werden kann,
mehrere Auslasskanäle, die unterhalb des Einlasses angeordnet sind und die mit Beförderungskanälen (13a, 13b, 14a, 14b; 13a', 13b', 13c', 13d') für pneumatische Weiterbeförderung des körnigen Materials verbinden,
einen Verteilerbereich (1226, 1226'), der zwischen dem Einlass und den Auslässen angeordnet ist und der, gesehen in einer Ebene, im Wesentlichen senkrecht zu einer Hauptrichtung des Materialflusses in dem Verteilerbereich, Verteileröffnungen (1226a, 1226b, 1226c, 1226d, 1226e, 1226f; 1226a', 1226b', 1226c', 1226d', 1226e', 1226f', 1226g', 1226h', 1226i', 1226j', 1226k', 1226l', 1226m', 1226n', 1226o', 1226p') bildet, die zu jeweiligen Auslässen führen,
wobei der Verteilerbereich, gesehen in der Ebene, eine Länge (L, L') und eine Breite (B, B') hat, wobei die Länge größer ist als die Breite,
wobei die Verteileröffnungen in einer Reihe entlang eines von der Länge und der Breite angeordnet sind und,
gesehen entlang der Reihe von Verteileröffnungen, wenigstens zwei, vorzugsweise alle Paare benachbarter Verteileröffnungen mit Auslasskanälen verbinden, die zu unterschiedlichen Beförderungskanälen führen,
wobei
wenigstens zwei Verteileröffnungen mit Auslasskanälen verbinden, die zu dem gleichen Beförderungskanal führen,
**dadurch gekennzeichnet, dass** eine Querschnittsfläche des Einlassabschnitts (1211), der mit der Speisevorrichtung (11) verbunden werden kann, und die Querschnittsfläche des Verteilerbereichs gleich groß +/- 10 %, +/- 5 % oder +/-1% sind.

2. Landwirtschaftliches Gerät nach Anspruch 1, wobei die Verteilereinheit eine Anzahl n von Beförderungskanälen und eine Anzahl x*n von Verteileröffnungen hat, wobei n eine ganze Zahl ist und wobei jede n-te Verteileröffnung zu dem gleichen Beförderungskanal führt.

3. Landwirtschaftliches Gerät nach Anspruch 1 oder 2, wobei die Verteilereinheit (1, 1') eine Anzahl von Auslasskanälen und eine Anzahl von Beförderungskanälen hat und wobei gleich viele Auslasskanäle mit jedem der Beförderungskanäle verbinden.

4. Landwirtschaftliches Gerät nach einem der vorhergehenden Ansprüche, wobei sich eine Querschnittsform des Einlasses, gesehen in einer Ebene, im Wesentlichen senkrecht zu der Strömungsrichtung, von einer Querschnittsform des Verteilerbereichs unterscheidet.

5. Landwirtschaftliches Gerät nach einem der vorhergehenden Ansprüche, wobei eine Flächensenkrechte an einem geometrischen Schwerpunkt einer Querschnittsfläche, senkrecht zu der Hauptrichtung des Materialflusses, für den Einlass und eine Flächensenkrechte an einem geometrischen Schwerpunkt für eine Querschnittsfläche, senkrecht zu der Hauptrichtung des Materialflusses, für den Verteilerbereich nicht ausgerichtet sind, gesehen parallel zu der Hauptrichtung des Materialflusses von dem Einlass zu dem Verteilerbereich.

6. Landwirtschaftliches Gerät nach einem der vorhergehenden Ansprüche, das ferner ein Element zum Ausbreiten des körnigen Materials über wenigstens die Länge des Verteilerbereichs umfasst.

7. Landwirtschaftliches Gerät nach Anspruch 6, wobei das Ausbreitungselement eine konvexe Wand umfasst, die sich zwischen dem Einlass und dem Verteilerbereich erstreckt.

8. Landwirtschaftliches Gerät nach Anspruch 7, wobei die Wand einen nach innen konvexen Abschnitt, gesehen in einer Ebene, welche die Hauptrichtung des Materialflusses enthält, und/oder gesehen in einer Ebene, senkrecht zu der Hauptrichtung des Materialflusses, umfasst.

9. Landwirtschaftliches Gerät nach Anspruch 8, wobei der nach innen konvexe Abschnitt im Wesentlichen zentriert an der Wand angeordnet ist.

10. Landwirtschaftliches Gerät nach einem der vorhergehenden Ansprüche, wobei wenigstens eine Luftstromerzeugungseinheit mit den Beförderungskanälen verbunden ist, vorzugsweise stromaufwärts von der Verteilereinheit, so dass den Beförderungskanälen zugeführtes körniges Material pneumatisch weiterbefördert wird.

11. Landwirtschaftliches Gerät nach einem der vorhergehenden Ansprüche, wobei die Verteilereinheit derart konfiguriert ist, dass das körnige Material hauptsächlich mit Hilfe der Schwerkraft dem Einlass zugeführt wird.

12. Verfahren zur Verteilung von körnigem Material in einem landwirtschaftlichen Gerät, wobei das Verfahren Folgendes umfasst:
Leiten des Materials durch einen Einlass zu einem Verteilerbereich, der mehrere Verteileröffnungen umfasst, und von dem Verteilerbereich über Auslasskanäle zu wenigstens zwei Beförderungskanälen,
wobei der Verteilerbereich, gesehen in der Ebene, eine Länge und eine Breite hat, wobei die Länge größer ist als die Breite und die Verteileröffnungen in einer Reihe entlang eines von der Länge und der Breite angeordnet sind,
Leiten des Materials von dem Verteilerbereich durch einen Auslasskanal, der mit einer jeweiligen Öffnung verknüpft ist, zu einem der Beförderungskanäle,
wobei
sich Material von wenigstens zwei der Auslasskanäle in einem jeweiligen Beförderungskanal sammelt und
**dadurch gekennzeichnet, dass** eine Querschnittsfläche des Einlassabschnitts, der mit einer Speisevorrichtung verbunden werden kann, und die Querschnittsfläche des Verteilerbereichs gleich groß +/-10 %, +/- 5 % oder +/-1% sind.

## Revendications

1. Dispositif agricole comprenant une unité distributrice pour la distribution de matériau granulaire, laquelle unité distributrice comprenant :
une entrée (121) connectable à un dispositif d'alimentation (11) ;
une pluralité de canaux de sorties qui sont situés en dessous de l'entrée (13a, 13b, 14a, 14b; 13a', 13b', 13c', 13d') pour le transport pneumatique vers l'avant du matériau granulaire,
une zone distributrice (1226, 1226'), qui est située entre l'entrée et les sorties et qui, vue dans un plan sensiblement perpendiculaire à un sens principal du flux de matériau dans la zone distributrice, forme des orifices distributeurs (1226a, 1226b, 1226c, 1226d, 1226e, 1226f; 1226a', 1226b', 1226c', 1226d', 1226e', 1226f; 1226g', 1226h', 1226i', 1226j', 1226k', 12261', 1226m', 1226n', 1226o', 1226p') menant à des sorties respectives,
la zone distributrice, vue dans ledit clan, ayant une longueur (L, L') et une largeur (B, B'), la longueur étant supérieure à la largeur,
les orifices distributeurs étant disposés en une rangée le long soit de ladite longueur, soit de ladite largeur et,
vues le long de ladite rangée d'orifices distributeurs, au moins deux, de préférence toutes les paires d'orifices distributeurs adjacents se connectant des canaux de sortie menant à différents canaux de transport,
au moins deux orifices distributeurs se connectant à des canaux de sortie menant au même canal de transport,
**caractérisé en ce qu'**une zone de section transversale de la section d'entrée (1211) qui est connectable au dispositif d'alimentation (11) et la zone de section transversale de la zone distributrice sont de même dimensions +/- 10 %, +/- 5 % ou +/-1 %.

2. Dispositif agricole selon la revendication 1, dans lequel l'unité distributrice comporte un nombre n de canaux de transport et un nombre x*n d'orifices distributeurs, n étant un nombre entier et dans lequel chaque énième orifice distributeur mène au même canal de transport.

3. Dispositif agricole selon la revendication 1 ou 2, dans lequel l'unité distributrice (1, 1') comporte un certain nombre de canaux de sortie et un certain nombre de canaux de transport et dans lequel un nombre égal de canaux de sortie se connectent à chacun des canaux de transport.

4. Dispositif agricole selon l'une quelconque des revendications précédentes, dans lequel une forme de section transversale de l'entrée, vue dans un plan transversal au sens de flux, diffère d'une forme de section transversale de la zone distributrice.

5. Dispositif agricole selon l'une quelconque des revendications précédentes, dans lequel une surface normale au niveau d'un centre géométrique de gravité d'une zone de section transversale perpendiculaire au sens principal de flux de matériau pour l'entrée et une surface normale au niveau d'un centre géographique de gravité pour une zone de section transversale perpendiculaire au sens principal de flux de matériau pour la zone distributrice ne sont pas alignées vues parallèlement avec le sens principal du flux de matériau depuis l'entrée jusqu'à la zone distributrice.

6. Dispositif agricole selon l'une quelconque des revendications précédentes, comprenant en outre un élément pour étaler le matériau granulaire au moins sur la longueur de la zone distributrice.

7. Dispositif agricole selon la revendication 6, dans lequel ledit élément d'étalement comprend une paroi convexe s'étendant entre l'entrée et la zone distributrice.

8. Dispositif agricole selon la revendication 7, dans lequel ladite paroi comprend une section convexe vers l'intérieur vue dans un plan englobant le sens principal de flux de matériau et/ou vue dans un plan perpendiculaire au sens principal du flux de matériau.

9. Dispositif agricole selon la revendication 8, dans lequel la section convexe vers l'intérieur est située sensiblement centrée sur la paroi.

10. Dispositif agricole selon l'une quelconque des revendications précédentes, dans lequel au moins une unité de génération de courant d'air est connectée auxdits canaux de transport, de préférence en amont de l'unité distributrice, de sorte que le matériau granulaire versé dans les canaux de transport est transporté vers l'avant par système pneumatique.

11. Dispositif agricole selon l'une quelconque des revendications précédentes, dans lequel l'unité distributrice est conçue de manière à ce que le matériau granulaire soit versé à l'entrée principalement à l'aide de la force de gravité.

12. Procédé de distribution de matériau granulaire dans un dispositif agricole, comprenant :
l'acheminement du matériau à travers une entrée vers une zone distributrice comprenant une pluralité d'orifices distributeurs et depuis la zone distributrice via des canaux de sortie vers au moins deux canaux de transport,
la zone distributrice, vue dans un plan perpendiculaire à un sens principal de flux de matériau au niveau de la zone distributrice, ayant une longueur et une largeur, la longueur étant supérieure à la largeur, et les orifices distributeurs étant disposés en une rangée le long soit de ladite longueur, soit de ladite largeur,
l'acheminement du matériau depuis la zone distributrice à travers le canal de sortie associé à un orifice respectif vers un des canaux de transport,
l'acheminement de quantités partielles de matériau qui sont acheminées par au moins deux, de préférence toutes les paires d'orifices distributeurs adjacents vers différents canaux de transport,
le matériau provenant d'au moins deux desdits canaux de sortie étant rassemblé dans un canal de transport respectif et
**caractérisé en ce qu'**une zone de section transversale de la section d'entrée qui est connectable à un dispositif d'alimentation et la zone de section transversale de la zone distributrice sont de même dimensions +/- 10 %, +/- 5 % ou +/-1 %.
